# EUROPÄISCHE PATENTANMELDUNG

(11) **EP 2 000 879 A2**
(43) Veröffentlichungstag der Anmeldung: **10.12.2008**
(21) Anmeldenummer: 08100203.2
(22) Anmeldetag: 08.01.2008
(51) Int. Cl.: G06F 1/18

(54) **Anordnung und Verfahren zum Festlegen einer Einschubbaugruppe**

(30) Priorität: 29.05.2007 DE 102007024896
(71) Anmelder: Fujitsu Siemens Computers GmbH, 80807 München (DE)
(72) Erfinder: Kannler, Bernhard, 86199, Augsburg (DE); Schmid, Michael, 89407, Dillingen (DE)
(74) Vertreter: Epping - Hermann - Fischer

(57) **Zusammenfassung**

Die Erfindung betrifft eine Anordnung (1) zum Festlegen einer Einschubbaugruppe (17) in einem Einbaukäfig (16) eines Computers, aufweisend eine Halteschiene (2) mit wenigstens einer Kontaktfläche (5, 19) zum Festlegen der Halteschiene (2) in dem Einbaukäfig (16) und wenigstens einem Haltestift (4) zum Eingreifen in eine seitliche Befestigungsöffnung der Einschubbaugruppe (17), wobei die Halteschiene (2) durch den wenigstens einen Haltestift (4) seitlich an der Einschubbaugruppe (17) festlegbar ist. Die Anordnung (1) ist dadurch gekennzeichnet, dass in der Halteschiene (2) wenigstens eine erste Öffnung (10) ausgebildet ist, wenigstens ein topfartig ausgeformter Schwingungsdämpfer (3) aus einem elastischen Material klemmend in der ersten Öffnung (10) aufgenommen ist und der wenigstens eine Haltestift (4) klemmend in dem Schwingungsdämpfer (3) aufgenommen ist, wobei der Schwingungsdämpfer (3) den Haltestift 4 zumindest teilweise mantelförmig umgibt.

Die Erfindung betrifft außerdem ein Verfahren zum Festlegen einer Einschubbaugruppe(17) in einem Computer.

## Beschreibung

Die Erfindung betrifft eine Anordnung zum Festlegen einer Einschubbaugruppe in einem Einbaukäfig eines Computers, aufweisend eine Halteschiene mit wenigstens einer Kontaktfläche zum Festlegen der Halteschiene in dem Einbaukäfig und wenigstens einem Haltestift zum Eingreifen in eine seitliche Befestigungsöffnung der Einschubbaugruppe, wobei die Halteschiene durch den wenigstens einen Haltestift seitlich an der Einschubbaugruppe festlegbar ist.

Aus der DE 102 13 526 A1 ist eine Anordnung der oben genannten Art bekannt. Solche Halteschienen erlauben unter anderem einen besonders einfachen und schnellen Einbau und Ausbau von Einschubbaugruppen, insbesondere Laufwerken, in einem Computergehäuse. Außer der Vereinfachung der Montage erlauben derartige Anordnungen auch eine Federung der Einschubbaugruppe, um mechanische Belastungen zu vermindern. Denn beim Transport oder bei so genannten Falltests können große Kräfte auf die Einschubbaugruppe einwirken, die abgefedert werden müssen, um eine Beschädigung der Einschubbaugruppe zu vermeiden.

Halteschienen aus einem einzelnen Material können die geforderten Dämpfung meist nur ungenügend erbringen, da sie keine hinreichende Möglichkeit bieten, ihre Dämpfungseigenschaften an die teilweise sehr speziellen Anforderungen anzupassen.

Anordnungen aus Verbundmaterialien, wie sie etwa im so genannten Zweikomponenten-Spritzgussverfahren hergestellt werden können, bereiten unter anderem beim Recycling große Probleme, weil die darin verwendeten Kunststoffe nicht einfach voneinander getrennt werden können.

Anordnungen bestehend aus mehreren, ineinander greifenden Halteschienen sind zwar leichter wieder zu verwerten, aber aufwändiger und teurer in der Herstellung. Zudem können solche Anordnungen zwar Stöße dämpfen, verhindern aber nicht unbedingt das Auftreten von Resonanzschwingungen, wie sie etwa bei besonders hochtourigen Speicherlaufwerken mit großen Schreibdichten auftreten.

Aufgabe der vorliegenden Erfindung ist es daher, eine besonders einfach aufgebaute und leicht wieder zu verwendende Haltevorrichtung für Einschubbaugruppen anzugeben, die sowohl Schwingungen als auch Stöße wirksam dämpft.

Die zugrunde liegende Aufgabe wird durch eine Anordnung zum Festlegen einer Einschubbaugruppe der oben genannten Art gelöst, die dadurch gekennzeichnet ist, dass in der Halteschiene wenigstens eine erste Öffnung ausgebildet ist, wenigstens ein topfartig ausgeformte Schwingungsdämpfer aus einem elastischen Material klemmend in der ersten Öffnung aufgenommen ist und der wenigstens eine Haltestift klemmend in dem Schwingungsdämpfer aufgenommen ist, wobei der Schwingungsdämpfer den Haltestift zumindest teilweise mantelförmig umgibt.

Die einzelnen Teile der oben angegebenen Anordnung können in ihren Materialeigenschaften an die erforderlichen Dämpfungseigenschaften angepasst werden. Durch den mantelförmigen Schwingungsdämpfer wird eine direkte Schwingungsübertragung zwischen dem Haltestift und der Halteschiene unterbunden.

Zugleich wird durch die klemmende Montage der Einzelteile eine einfache Zerlegung der Anordnung zum Recycling ermöglicht.

Gemäß einer vorteilhaften Ausgestaltung weist der Schwingungsdämpfer eine an seiner Außenseite umlaufende erste Nut auf, und die Halteschiene weist im Bereich der ersten Öffnung wenigstens eine erste Rastnase auf, die in die erste umlaufende Nut des Schwingungsdämpfers eingreift. Durch Verwendung einer umlaufenden Nut und einer Rastnase kann der Schwindungsdämpfer durch Verrasten mit der Halteschiene werkzeug- und klebstofffrei festgelegt werden.

Gemäß einer weiteren vorteilhaften Ausgestaltung weist der Haltestift eine auf seine Außenseite umlaufende zweite Nut auf, und der Schwingungsdämpfer weist auf seiner Innenseite wenigstens eine zweite Rastnase auf, die in die zweite umlaufende Nut des Haltestifts eingreift. Durch Verwendung einer zweiten umlaufenden Nut und einer zweiten Rastnase kann auch der Haltestift werkzeug- und klebstofffrei an dem Schwingungsdämpfer festgelegt werden.

Gemäß einer weiteren vorteilhaften Ausgestaltung sind die erste und zweite Rastnase bezogen auf die Symmetrieachse des Haltestiftes um etwa 90 Grad voneinander versetzt angeordnet. Durch die versetzte Anordnung der ersten und zweiten Rastnase wird die Schwingungsdämpfung durch den Schwingungsdämpfer optimiert, da der erste und zweite Rastmechanismus mechanisch voneinander entkoppelt werden.

Gemäß einer weiteren vorteilhaften Ausgestaltung ist wenigstens eine elektrisch leitfähige Kontaktfeder an der Halteschiene angeordnet, durch die ein elektrischer Kontakt zwischen der Einschubbaugruppe und dem Einbaukäfig herstellbar ist. Durch Verwendung einer elektrisch leitfähigen Kontaktfeder kann eine sichere Masseverbindung zwischen der Einschubbaugruppe und dem Einbaukäfig auch dann hergestellt werden, wenn die Einschubbaugruppe durch das Dämpfungselement mechanisch und elektrisch von dem Einbaukäfig entkoppelt ist.

Die zugrunde liegende Aufgabe wird ebenso durch ein Verfahren zum Festlegen einer Einschubbaugruppe in einem Computer mit den folgenden Schritten gelöst:
- Bereitstellen einer Halteschiene mit wenigstens einer ersten Öffnung,
- Einstecken wenigstens eines topfförmigen Schwingungsdämpfers aus einem elastischen Material in die erste Öffnung,
- Einstecken wenigstens eines Haltestiftes in den Schwingungsdämpfer,
- seitliches Aufstecken der Halteschiene auf die Einschubbaugruppe durch Einführen des Haltestiftes in wenigstens eine Befestigungsöffnung der Einschubbaugruppe und
- Einschieben der Baugruppe in einem Einbaukäfig des Computers, wobei wenigstens eine Kontaktfläche der Halteschiene mit wenigstens einem Halteelement des Einbaukäfigs zusammenwirkt und die Halteschiene in der Einschubbaugruppe festlegt.

Weitere Einzelheiten und Ausgestaltungen der Erfindung sind in den Unteransprüchen angegeben.

Die Erfindung wird nachfolgend an einem Ausführungsbeispiel anhand der Zeichnungen näher erläutert. In den Zeichnungen zeigen:
- Figur 1: eine Explosionsdarstellung einer Anordnung zur Festlegung einer Einschubbaugruppe,
- Figur 2A: einen ersten Längsschnitt durch die Anordnung zur Festlegung einer Einschubbaugruppe,
- Figur 2B: eine Draufsicht auf die Anordnung zur Festlegung der Einschubbaugruppe,
- Figur 2C: einen Querschnitt durch die Anordnung zur Festlegung einer Einschubbaugruppe,
- Figur 2D: einen zweiten Längsschnitt durch die Anordnung zur Festlegung einer Einschubbaugruppe,
- Figur 3: einen Einbaukäfig eines Computers mit zwei Einschubbaugruppen und
- Figur 4: jeweils eine Vorder- und Rückansicht einer zusammengesetzten Anordnung zur Festlegung einer Einschubbaugruppe.

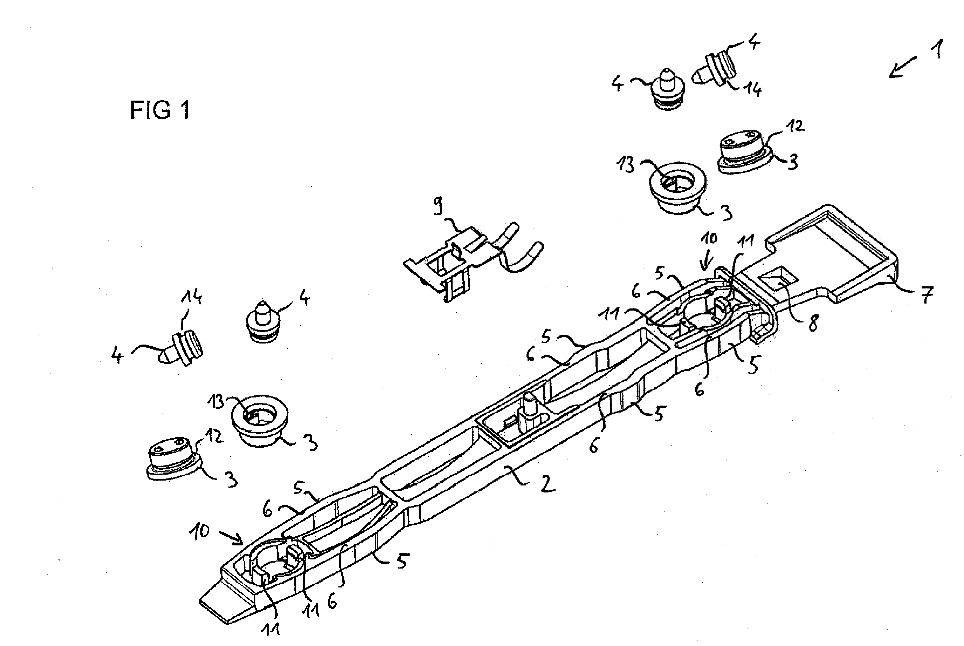

Figur 1 zeigt eine Anordnung 1 umfassend eine Halteschiene 2, Schwingungsdämpfer 3 sowie Haltestifte 4. In der Explosionsdarstellung der Figur 1 sind jeweils vier Schwingungsdämpfer 3 und vier Haltestifte 4 dargestellt, obwohl in der zusammengesetzten Anordnung 1 gemäß dem dargestellten Ausführungsbeispiel nur je zwei Schwingungsdämpfer 3 und Haltestifte 4 benötigt werden. Die Verdopplung der dargestellten Bauteile dient einzig und allein zur besseren Darstellung der Schwingungsdämpfer 3 und Haltestifte 4 in verschiedenen Ansichten.

Die Halteschiene 2 umfasst Kontaktflächen 5 die die Halteschiene 2 im eingebauten Zustand in vertikaler Richtung zwischen in der Figur 1 nicht dargestellten Halteelementen eines Einbaukäfigs eines Computers festlegen. Zusätzlich zu den dargestellten Kontaktflächen 5 weist die Halteschiene 2 weitere Kontaktflächen auf, die die Halteschiene im eingebauten Zustand auch in horizontaler Richtung festlegen. Diese Kontaktflächen weisen in der Darstellung der Figur 1 jedoch nach unten und sind daher nicht ersichtlich. Die Kontaktflächen 5 sind an Federelementen 6 angeordnet, die eine Stoßdämpfung zwischen der Halteschiene 2 und dem Einbaukäfig bewirken.

An einem Ende der Halteschiene 2 ist im Bereich eines Endstücks 7 eine Rastnase 8 angeordnet. Die Rastnase 8 greift im eingebauten Zustand in eine Öffnung des Einbaukäfigs ein und legt die Halteschiene 2 somit in Einschubrichtung an dem Einbaukäfig fest. Das Endstück 7 kann zum Lösen der Verrastung leicht gegenüber der Halteschiene 2 abgebogen werden, um ein Herausnehmen eines einmal eingebauten Einschubmoduls zu ermöglichen.

Zusätzlich weist die Anordnung 1 eine Kontaktfeder 9 auf, die einen elektrischen Kontakt zwischen einer Wand des Einbaukäfigs und einer an der Halteschiene 2 festgelegten Einschubbaugruppe herstellt. Im Ausführungsbeispiel ist die Kontaktfeder 9 aus Metallblech gefertigt und derart ausgestaltet, dass sie die Halteschiene 2 teilweise umfassen kann und so an dieser befestigbar ist. Die Federkraft der Kontaktfeder 9 ist so ausgelegt, dass nur eine vernachlässigbare Übertragung mechanischer Schwingungen durch die Kontaktfeder 9 möglich ist.

Die Halteschiene 2 besteht im Ausführungsbeispiel aus einem festen Kunststoffmaterial, wie beispielsweise aus Polycarbonat Acrylnitril-Butadien-Styrol (PC/ABS) Kunststoff, und weist zwei erste Öffnungen 10 auf, die zum Einpassen der Schwingungsdämpfer 3 dienen. Die erste Öffnung 10 umfasst hierfür zwei erste Rastnasen 11, die in einer ersten Richtung mit Bezug auf die Symmetrieachse der ersten Öffnung 10, im Ausführungsbeispiel in der Einschubrichtung, angeordnet sind.

Die ersten Rastnasen 11 greifen in eine erste umlaufende Nut 12 der Schwingungsdämpfer 3 ein. Die Schwingungsdämpfer 3 sind aus einem elastischen Material beispielsweise Ethylen-Propylen-Dien-Kautschuk (EPDM) oder einem anderen geeigneten Elastomer gefertigt und dämpfen insbesondere Resonanzschwingungen, wie sie beim Betrieb besonders hochtouriger Speicherlaufwerken wie Festplatten oder DVD-Laufwerken auftreten. Die Schwingungsdämpfer 3 haben im Wesentlichen die Form eines Bechers oder Topfes, wobei die erste umlaufende Nut 12 auf der Außenseite der Mantelfläche direkt unterhalb eines Kragens angeordnet ist.

Die Dämpfung von durch Einschubbaugruppen verursachten Schwingungen ist insbesondere bei mehreren, in einem gemeinsamen Einbaukäfig angeordneten Speicherlaufwerken wichtig. Durch die mittlerweile üblichen, sehr hohe Drehzahlen und Schreibdichten, muss auch die Positionierung von Schreib- und Leseköpfen sehr schnell und zielgenau erfolgen. Eine durch eine Schwingung verursachte Störung der Positionierung führt dabei zu einer verhältnismäßigen zeitaufwändigen Nachregelung, die die Zugriffszeit vergrößert und die Datenübertragungsrate vermindert.

Auf der Innenseite der Mantelfläche sind zwei zweite Rastnasen 13 angeordnet, die in eine zweite umlaufende Nut 14 auf der Außenseite der Haltestifte 4 eingreifen. Die Haltestifte 4 sind aus einem harten Material, beispielsweise aus Metall gefertigt. Beispielsweise kann es sich um Drehteile handeln, die einen durch einen Kragen getrennten Stift und ein Kopfstück mit der zweiten umlaufenden Nut 14 aufweisen. Die Stifte sind derart dimensioniert, dass sie insbesondere in üblicherweise zur Verschraubung von Einschubbaugruppen gedachten Befestigungsöffnungen eingreifen können.

Um die Dämpfungseigenschaften der dargestellten Anordnung zu optimieren, werden die Schwingungsdämpfer 3 derart in den ersten Öffnungen 10 angeordnet, dass die ersten Rastnasen 11 und die zweiten Rastnasen 13 im eingesetzten Zustand um 90 Grad zueinander versetzt angeordnet sind. Beispielsweise sind die zweiten Rastnasen 13 im dargestellten Ausführungsbeispiel in einer vertikalen Richtung angeordnet, also senkrecht zur Einschubrichtung, in der die ersten Rastnasen 11 angeordnet sind. Auf diese Weise wird eine direkte Übertragung von Schwingungen durch eine Quetschung der Schwingungsdämpfer 3 zwischen den ersten Rastnasen 11 und den zweiten Rastnase 13 vermieden.

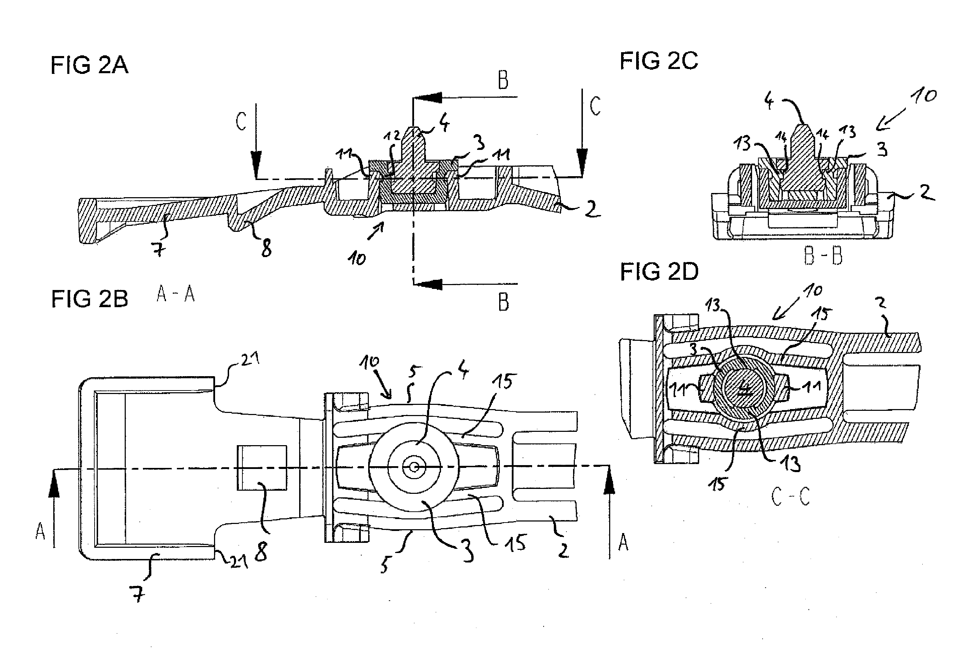

Figur 2A zeigt einen ersten Längsschnitt durch die Anordnung 1 im Bereich des Endstückes 7 und der vorderen ersten Öffnung 10. Hierin ist unter anderem zu erkennen, dass die ersten Rastnasen 11 in dieser Richtung in die umlaufende Nut 12 des Schwingungsdämpfer 3 eingreifen, in der Verlängerung dieser Linie jedoch ein Luftspalt in der zweiten umlaufenden Nut 14 des Haltestiftes 4 diesen von der Halteschiene 2 mechanisch entkoppelt. Der Kragen des Schwingungsdämpfers 3 liegt auf der Halteschiene 2 auf, so dass der Schwingungsdämpfer 3 nicht durch die Halteschiene 2 hindurch treten kann. Zusätzlich oder alternativ ist es auch möglich, den Boden der ersten Öffnung 10 teilweise zu verschließen, wie dies in der Figur 2A dargestellt ist.

In der Figur 2B ist eine Draufsicht aus Sicht einer Einschubbaugruppe auf die Halteschiene 2 mit dem daran angeordneten Endstück 7 dargestellt. In dieser Ansicht ist insbesondere gut zu erkennen, dass der Haltestift 4 mechanisch durch den Kragen des Schwingungsdämpfers 3 vollständig von der Halteschiene 2 isoliert ist. Somit ist keine direkte Schwingungsübertragung von dem Haltestift 4, der in eine Befestigungsöffnung einer Einschubbaugruppe eingeführt wird, und der Halteschiene 2, die an dem Einbaukäfig festgelegt wird, möglich.

Zur weiteren Optimierung der Dämpfungseigenschaften der Halteschiene 2 ist die erste Öffnung 10 im Bereich zwischen zwei weiteren Federelementen 15 ausgebildet. Die Federelemente 15 dämpfen die Kräfte insbesondere starker Stöße zwischen dem Einbaukäfig und der Einschubbaugruppe weiter ab.

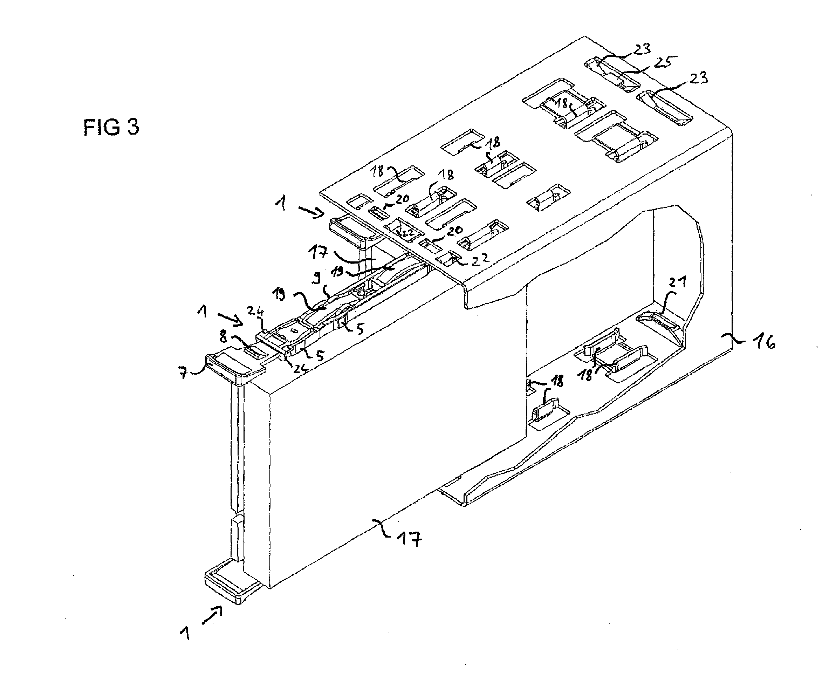

Zudem ist in der Figur 2B zu erkennen, dass die der Halteschiene 2 zugewandte Seite des Endstücks 7 zwei Anschläge 21 aufweist, die über und unter der oberen beziehungsweise unteren Kante der Halteschiene 2 herausragen und diese in Einschubrichtung festlegen. Die Festlegung wird weiter unten anhand der Figur 3 weiter erläutert.

Die Anschläge 21 sind räumlich in der Nähe der Rastnase 8 angeordnet. Auf diese Weise wird ein störender Einfluss der unterschiedlichen Längenausdehnung der beteiligten Materialen bei Erwärmung im Betrieb, zum Beispiel eines Kunststoffes der Halteschiene 2 und eines Metalls eines Einbaukäfigs soweit wie möglich vermieden. Auch andere Einflussgrößen als die Temperatur, beispielsweise eine durch eine hohe Umgebungsfeuchtigkeit versuchte hygroskopisch bedingte Längenausdehnung, können auf diese Weise vermieden werden.

In der Figur 2C ist ein Querschnitt durch die vordere erste Öffnung 10 dargestellt. In dem Querschnitt ist das Eingreifen der zweiten Rastnasen 13 in die umlaufende Nut 14 der Haltestifte 4 zu erkennen. In Richtung des in der Figur 2C dargestellten Querschnitts entlang der Achse B-B verbleibt ein Luftspalt zwischen der Halteschiene 2 und dem Schwingungsdämpfer 3 im Bereich der zweiten Rastnasen 13, so dass auch in dieser Richtung eine mechanische Entkopplung des Haltestiftes 4 von der Halteschiene 2 gewährleistet ist. Zudem ist der Schwingungsdämpfer 3 an seinem unteren Ende teilweise verschlossen, so dass sowohl ein Hindurchtreten des Haltestiftes 4 als auch ein direkter mechanischer Kontakt zwischen dem Haltestift 4 und der Halteschiene 2 verhindert wird.

Figur 2D zeigt einen zweiten Längsschnitt der Anordnung 1 im Bereich der ersten Öffnung 10. Der zweite Längsschnitt durch die erste Öffnung 10 entlang der Achse C-C zeigt die Federelemente 15 besonders gut. Auch ist hierin zu erkennen, dass die ersten Rastnasen 11 und die zweiten Rastnasen 13 in etwas um 90 Grad versetzt zueinander angeordnet sind, um eine mechanische Entkopplung des Haltestiftes von der Halteschiene 2 in zwei zueinander und zur Symmetrieachse des Haltestiftes 4 orthogonalen Richtungen zu gewährleisten.

Figur 3 zeigt einen Einbaukäfig 16 eines nicht dargestellten Computers, in dem eine erste Einschubbaugruppe 17 mittels zweier Anordnungen 1 festgelegt werden soll. Die erste Einschubbaugruppe 17 ist in einem nur teilweise eingeschobenen Zustand dargestellt, um das Zusammenwirken der verschiedenen Elemente der Anordnung 1 mit dem Einbaukäfig 16 und der Einschubbaugruppe 17 darzustellen. Eine zweite, in der Figur 3 überwiegend verdeckte, Einschubbaugruppe 17 ist hinter der ersten Einschubbaugruppe 17 im vollständig eingeschobenen Zustand dargestellt.

Der Einbaukäfig 16 weist verschiedene Halteelemente 18 auf, die mit den Kontaktflächen 5 der Anordnung 1 zusammenwirken. Des Weiteren wirken weitere Kontaktflächen 19 mit Seitenwänden des Einbaukäfigs 16 zusammen. Im Ausführungsbeispiel ist der Einbaukäfig 16 aus Metallblechen hergestellt, aus denen die Halteelemente 18 heraus gebogen sind.

Die Rastnase 8 im Bereich des Endstückes 7 greift im eingeschobenen Zustand in eine Öffnung 20 des Einbaukäfigs 16 ein. Gleichzeitig legen die Anschläge 21 des Endstücks 7 die Halteschiene 2 in Einschubrichtung fest, so dass die Einschubbaugruppe 17 im vollständig eingeschobenen Zustand in allen Raumrichtungen innerhalb des Einbaukäfigs 16 festgelegt ist.

Hierzu weist der Einbaukäfig 16 heraus gebogene Anschlagflächen 22 ober- beziehungsweise unterhalb der Öffnung 20 auf, die mit den Anschlägen 21 im vollständig eingeschobenen Zustand zusammenwirken. Zum Herausziehen der Einschubbaugruppe 17 müssen die zwei Endstücke 7, die als einziges Teil der Halteschiene 2 über die Einschubbaugruppe 17 hinausragen, nur zusammengedrückt werden, um die Verrastung der Rastnase 8 zu lösen und ein einfaches Herausziehen der Einschubbaugruppe 17 zu ermöglichen.

In dem dargestellten Ausführungsbeispiel verfügen der Einbaukäfig 16 sowie die Halteschienen 2 über zusätzliche Mittel zur Transportsicherung. Durch sie können ein oder mehrere Halteschienen 2 auch ohne eingebaute Einschubbaugruppen 17 in dem Einbaukäfig 16 befestigt werden, so dass diese für einen späteren Einbau von weiteren Einschubbaugruppen 17 zur Verfügung stehen.

Hierzu legen heraus gebogene Haltebrücken 23 die Halteschiene 2 im eingeschobenen Zustand auch ohne eingebaute Einschubbaugruppe 17 im Einbaukäfig 16 fest. Anhand der zweiten, bereits vollständig eingeschobenen Einschubbaugruppe 17 ist zu erkennen, dass ein hinteres Endstück 25 der Halteschienen 2 zu dessen Fixierung hinter die heraus gebogenen Haltebrücken 23 fasst. Des Weiteren umfasst jede der Halteschienen 2 jeweils zwei Laschen 24, die im eingeschobenen Zustand hinter Teile der vorderen Haltelemente 18 greifen, um diese gegen ein Herausfallen zu sichern.

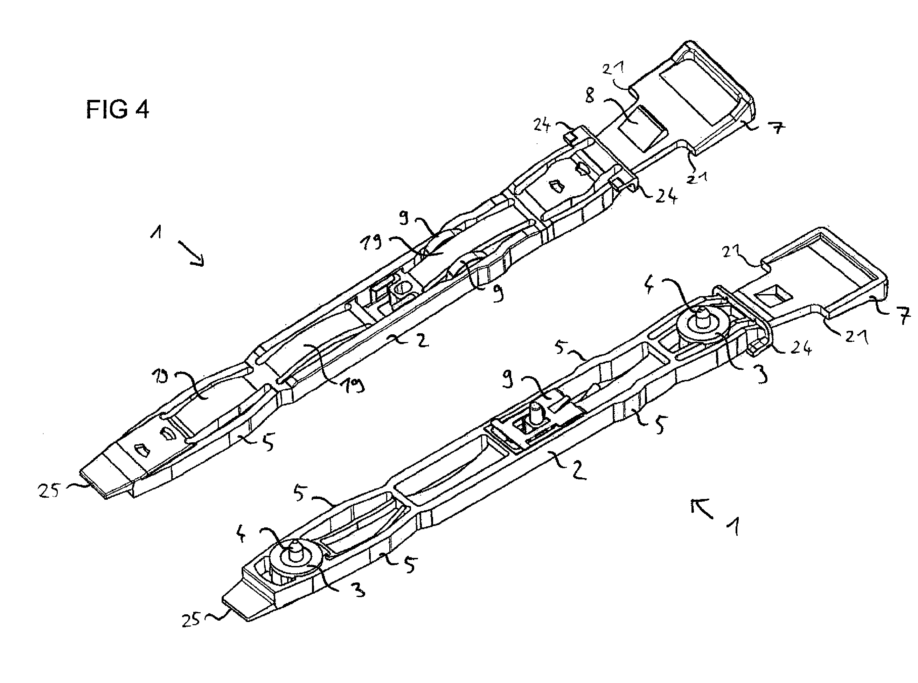

Figur 4 zeigt jeweils eine Vorder- und Rückansicht einer zusammengesetzten Anordnung 1. Hierin ist noch einmal das Zusammenwirken der verschiedenen Teile zu erkennen. Insgesamt stellt die Anordnung 1 vier verschiedene Funktionen bereit. Zum Ersten erlaubt sie eine schrauben- und werkzeuglose Festlegung einer Einschubbaugruppe 17 in einem Einbaukäfig 16. Dazu müssen die zusammen gesetzten Anordnungen 1 lediglich seitlich auf die Einschubbaugruppe 17 aufgesteckt und mit ihr zusammen in den Einbaukäfig 16 eingeschoben werden.

Zum Zweiten bieten die Federelemente 6 und 15 sowie die im Ausführungsbeispiel ebenfalls als Federelemente ausgeführten, gebogenen Kontaktflächen 19 im eingebauten Zustand eine Stoßdämpfung zwischen Einbaukäfig 16 und Einschubbaugruppe 17.

Drittens unterdrücken die Schwingungsdämpfer 3 wirkungsvoll Eigenschwingungen der Einschubbaugruppe 17 sowie eine Schwingungsübertragung von benachbarten Einschubbaugruppen 17.

Viertens wird durch die Kontaktfeder 9 eine sichere Masseverbindung zwischen der Einschubbaugruppe 17 und dem Einbaukäfig 16 hergestellt. Bei Einschubbaugruppen 17, die nicht auf eine Masseverbindung über das Gehäuse angewiesen sind, beispielsweise weil diese über eine Anschlussleitung bereitgestellt wird, kann auf die vierte Funktion und damit auch auf die Kontaktfeder 9 selbstverständlich verzichtet werden.

Auch die anderen Funktionen und damit verbundenen Merkmale sind verzichtbar, soweit sie in einer konkreten Anordnung nicht verwendet werden. Beispielsweise kann auf die Federelemente 6 und 15 versichtet werden, wenn die Stoßdämpfungsfunktion nicht benötigt oder auf andere Weise zur Verfügung gestellt wird. Zudem ist es möglich, die an sich schraubenlose Anordnung 1 durch zusätzliche Schrauben oder ähnliche Befestigungselemente zu sichern, um ein versehentliches Herausziehen einzelner Einschubbaugruppen im Betrieb zu verhindern.

Da die Haltestifte 4 mit dem Schwingungsdämpfer 3 und die Schwingungsdämpfer 3 mit der Halteschiene 2 lediglich verrastet oder, gemäß einer weiteren, nicht dargestellten Ausführungsform, in diese formschlüssig eingeklemmt sind, ist ein leichtes Trennen der unterschiedlichen Elemente der Anordnung 1 möglich. Auf diese Weise wird die Anordnung 1 der so genannten RoHS (Restriction of the use of certain hazardous substances in electrical and electronic equipment) Richtlinie der europäischen Gemeinschaft 2002/95/EG gerecht. Denn am Ende des Lebenszyklus eines Computers können die darin verbauten Komponenten der Anordnung 1 auf einfache Weise getrennt und so besonders leicht recycelt oder wieder verwendet werden.

### Bezugszeichenliste

- 1: Anordnung
- 2: Halteschiene
- 3: Schwingungsdämpfer
- 4: Haltestift
- 5: Kontaktfläche
- 6: Federelement
- 7: (vorderes) Endstück
- 8: Rastnase
- 9: Kontaktfeder
- 10: erste Öffnung
- 11: erste Rastnase
- 12: erste umlaufende Nut
- 13: zweite Rastnase
- 14: zweite umlaufende Nut
- 15: Federelement
- 16: Einbaukäfig
- 17: Einschubbaugruppe
- 18: Halteelement
- 19: Kontaktfläche
- 20: Öffnung
- 21: Anschlag
- 22: Anschlagfläche
- 23: Haltebrücke
- 24: Lasche
- 25: (hinteres) Endstück

## Patentansprüche

1. Anordnung (1) zum Festlegen einer Einschubbaugruppe (17) in einem Einbaukäfig (16) eines Computers, aufweisend
- eine Halteschiene (2) mit wenigstens einer Kontaktfläche (5, 19) zum Festlegen der Halteschiene (2) in dem Einbaukäfig (16) und
- wenigstens einem Haltestift (4) zum Eingreifen in eine seitliche Befestigungsöffnung der Einschubbaugruppe (17), wobei die Halteschiene (2) durch den wenigstens einen Haltestift (4) seitlich an der Einschubbaugruppe (17) festlegbar ist,
**dadurch gekennzeichnet, dass**
- in der Halteschiene (2) wenigstens eine erste Öffnung (10) ausgebildet ist,
- wenigstens ein topfartig ausgeformter Schwingungsdämpfer (3) aus einem elastischen Material klemmend in der ersten Öffnung (10) aufgenommen ist und
- der wenigstens eine Haltestift (4) klemmend in dem Schwingungsdämpfer (3) aufgenommen ist, wobei der Schwingungsdämpfer (3) den Haltestift (4) zumindest teilweise mantelförmig umgibt.

2. Anordnung (1) nach Anspruch 1,
**dadurch gekennzeichnet, dass**
der Schwingungsdämpfer (3) eine auf seiner Außenseite erste umlaufende Nut (12) aufweist und die Halteschiene (2) im Bereich der ersten Öffnung (10) wenigstens eine erste Rastnase (11) aufweist, die in die erste umlaufende Nut (12) des Schwingungsdämpfers (3) eingreift.

3. Anordnung (1) nach Anspruch 1 oder 2,
**dadurch gekennzeichnet, dass**
der Haltestift (4) eine auf seiner Außenseite zweite umlaufende Nut (14) aufweist und der Schwingungsdämpfer (3) auf seiner Innenseite wenigstens eine zweite Rastnase (13) aufweist, die in die zweite umlaufende Nut (14) des Haltestiftes (4) eingreift.

4. Anordnung (1) nach Anspruch 2,
**dadurch gekennzeichnet, dass**
der Haltestift (4) eine auf seiner Außenseite zweite umlaufende Nut (14) aufweist und der Schwingungsdämpfer (3) auf seiner Innenseite wenigstens eine zweite Rastnase (13) aufweist, die in die zweite umlaufende Nut (14) des Haltestiftes (4) eingreift, wobei die erste Rastnase (11) und die zweite Rastnase (13) bezogen auf die Symmetrieachse des Haltestiftes (4) um etwa 90 Grad versetzt angeordnet sind.

5. Anordnung (1) nach einem der Ansprüche 1 bis 4,
**dadurch gekennzeichnet, dass**
die Halteschiene (2) wenigstens zwei erste Öffnungen (10) aufweist, in denen jeweils ein topfartiger Schwingungsdämpfer (3) aufgenommen ist, wobei in jedem der Schwingungsdämpfer (3) jeweils ein Haltestift (4) zur Festlegung der Halteschiene (2) an Befestigungsöffnungen der Einschubbaugruppe (17) aufgenommen ist.

6. Anordnung (1) nach einem der Ansprüche 1 bis 5,
**dadurch gekennzeichnet, dass**
die Halteschiene (2) wenigstens eine erste Kontaktfläche (5) und eine zweite Kontaktfläche (19) aufweist, die die Halteschiene (2) in vertikaler beziehungsweise horizontaler Richtung in dem Einbaukäfig (16) festlegen.

7. Anordnung (1) nach einem der Ansprüche 1 bis 6,
**dadurch gekennzeichnet, dass**
die wenigstens eine Kontaktfläche (5, 19) im Bereich eines Federelementes (6) der Halteschiene (2) angeordnet ist.

8. Anordnung (1) nach einem der Ansprüche 1 bis 7,
**dadurch gekennzeichnet, dass**
die Halteschiene (2) wenigstens einen Anschlag (21) aufweist, der die Halteschiene (2) in Einschubrichtung festlegt.

9. Anordnung (1) nach einem der Ansprüche 1 bis 8,
**dadurch gekennzeichnet, dass**
die Halteschiene (2) eine dritte Rastnase (8) zum Verrasten der Halteschiene (2) mit einem Gegenrastelement des Einbaukäfigs (16) aufweist, wobei die dritte Rastnase (8) die Einschubbaugruppe (17) in einer vollständig eingeschobenen Position in dem Einbaukäfig (16) festlegt.

10. Anordnung (1) nach einem der Ansprüche 1 bis 9,
**dadurch gekennzeichnet, dass**
an der Halteschiene (2) wenigstens eine elektrisch leitfähig Kontaktfeder (9) angeordnet ist, durch die ein elektrischer Kontakt zwischen der Einschubbaugruppe (17) und dem Einbaukäfig (16) herstellbar ist.

11. Anordnung (1) nach einem der Ansprüche 1 bis 10,
**dadurch gekennzeichnet, dass**
an der Halteschiene (2) und/oder dem Einbaukäfig (16) Mittel zur Transportsicherung der Halteschiene (2) in dem Einbaukäfig (16) vorgesehen sind, so dass die Halteschiene (2) auch ohne aufgesteckte Einschubbaugruppe (17) in dem Einbaukäfig (16) befestigbar ist.

12. Verfahren zum Festlegen einer Einschubbaugruppe (17) in einem Computer mit den Schritten:
- Bereitstellen einer Halteschiene (2) mit wenigstens einer ersten Öffnung (10),
- Einstecken wenigstens eines topfförmigen Schwingungsdämpfers (3) aus einem elastischen Material in die erste Öffnung (10),
- Einstecken wenigstens eines Haltestiftes (4) in den Schwingungsdämpfer (3),
- seitliches Aufstecken der Halteschiene (2) auf die Einschubbaugruppe (17) durch Einführen des Haltestiftes (4) in wenigstens eine Befestigungsöffnung der Einschubbaugruppe (17) und
- Einschieben der Einschubbaugruppe (17) in einen Einbaukäfig (16) des Computers, wobei wenigstens eine Kontaktfläche (5, 19) der Halteschiene (2) mit wenigstens einem Halteelement (18) des Einbaukäfigs (16) zusammenwirkt und die Halteschiene (2) in dem Einbaukäfig (16) festlegt.
